# EUROPÄISCHE PATENTSCHRIFT

(11) **EP 1 485 038 B1**
(45) Veröffentlichungstag und Bekanntmachung des Hinweises auf die Patenterteilung: **16.04.2008**
(21) Anmeldenummer: 03702278.7
(22) Anmeldetag: 06.03.2003
(51) Int. Cl.: A61C 7/00, A61C 7/06

(54) **FUNKTIONSKIEFERORTHOPÄDISCHE APPARATUR MIT EXTRAORALEM HILFSMITTEL**
FUNCTIONAL ORTHODONTIC APPLIANCE WITH AN EXTRAORAL DEVICE
APPAREILLAGE ORTHODONTIQUE FONCTIONNEL A DISPOSITIF EXTRA-BUCCAL

(30) Priorität: 18.03.2002 CH 468022002
(43) Veröffentlichungstag der Anmeldung: 15.12.2004
(73) Patentinhaber: Herzog, Guido, 8400 Winterthur (CH)
(72) Erfinder: Herzog, Guido, 8400 Winterthur (CH)
(74) Vertreter: Schneider Feldmann AG Patent- und Markenanwälte
(86) Internationale Anmeldenummer: PCT/CH2003/000155
(87) Internationale Veröffentlichungsnummer: WO 2003/077787

(56) Entgegenhaltungen:
- EP-A- 0 364 652
- DE-A- 3 411 297
- DE-B- 1 281 105
- US-A- 2 880 509

## Beschreibung

Die vorliegende Erfindung betrifft eine funktionskieferorthopädische Apparatur mit einem Gesichtsbogen, der einen Vebergang oder einen Vebergangsbereich aufweist, als extraoralem Hilfsmittel zur Behandlung von Kiefer- und Zahnfehlstellungen. Eine FK0-Apparatus gemäss Oberbegriff des Patentanspruches 1 ist aus der DE-A 3411 297 bekannt.

Eine häufig auftretende Kiefer- und Zahnfehlstellung ist der Distalbiss. Eine Ursache ist eine maxilläre Prognathie, die sich im Vorstehen des Oberkiefers über das normale Maß hinaus äussert. Im Gegensatz zur Normalokklusion oder dem eugnathen Biß ist der Oberkiefer zu groß oder vorverlagert. Eine zweite Ursache ist eine mandibuläre Retrognathie. Sie äussert sich durch ein Zurückstehen des Unterkiefers. Eine dritte Ursache ist die maxilläre dentoalveoläre Protrusion. Sie äussert sich durch den Vorstand der Oberkieferzähne bei korrekter Kieferrelation. Die Behandlung erfolgt heute standardmässig durch festsitzende oder herausnehmbare kieferorthopädische Geräte oder durch funktions-kieferorthopädische Apparaturen (FKO-Apparaturen). Nur in besonders schweren und therapieresistenten Fällen ist eine zusätzliche chirurgisch kieferorthopädische Behandlung nötig.

Auf dem Markt sind unter dem Sammelbegriff FKO-Apparaturen verschiedenste Arten von Gebißreglern bekannt, welche zwar auf ähnlichen Wirkprinzipien basieren, sich aber in der Konstruktionsweise und Bauform stark unterscheiden. Die FKO-Apparaturen haben gemeinsam, dass sie gleichzeitig auf Ober- und Unterkiefer wirken und die Korrektur der Fehlstellung über die gezielte Umlenkung der im Mundraum wirkenden Muskelkräfte erreicht wird. Die Grundlage der Therapie mittels FKO-Geräten liegt darin, dass die zu behandelnde Person in einer Art Muskeltraining die hemmenden Fehlfunktionen der Muskulatur abtrainiert und somit die Korrektur der funktionellen Fehllage des Unterkiefers erreicht wird. Da die zu behandelnde Person die korrigierende Kraft bis zu einem gewissen Grad selbst dosieren kann, werden schmerzhafte oder schädliche Überlastung der Gewebe vermieden.

Bekannte FKO-Apparaturen umfassen zum Beispiel den Aktivator nach Andresen und Häupl, den Bionator nach Balters, den Gebißformer nach Bimler, den elastisch-offenen Aktivator nach Klammt, den Kinetor nach Stockfisch, den Kybernetor, den skelettierten Aktivator, den Funktionator (FIO), die Twin Bloc-Apparatur, den Zürcher Aktivator nach Teuscher, und den Funktionsregler nach Fränkel.

Die oft unter dem Oberbegriff "Aktivatoren" zusammengefassten Geräte sind mehr oder weniger starre Apparaturen, die lose im Mund liegen und keine fixen Halteelemente an den Zähnen aufweisen. Sie müssen durch die Muskulatur in einer bestimmten Position gehalten werden und wirken als Aktivatoren für die Kau- und Lippenmuskulatur. Es soll vor allem die Steuerung des Kieferwachstums und dadurch die Korrektur der Fehlstellung von Ober- und Unterkiefer zueinander erreicht werden. Dazu werden die Muskelkräfte in eine gewünschte Richtung umgelenkt oder geleitet, so dass das Kieferwachstum ebenfalls in die gewünschte Richtung folgt und schlussendlich die Fehlstellung ausgeglichen wird.

Da der Therapieerfolg vom Wachstum abhängig ist, werden FKO-Apparaturen vorzugsweise bei jungen und sehr jungen Patienten, zum Teil noch im Milchzahnalter, vorwiegend aber in der gemischten Dentition, eingesetzt, was ganz spezielle Probleme der Akzeptanz und Tragedisziplin mit sich bringt.

Der Funktionsregler nach Fränkel vermittelt die Kieferkorrektur ausschließlich über die Muskulatur. Die Therapie mit dem Fränkel Funktionsregler bedingt eine Angewöhnungsphase, in der die dysfunktionale Muskulatur tagsüber mittels der Fränkel-FKO-Apparatur trainiert und gestärkt wird. Dieses Training wird so lange gesteigert, bis in einer eigentlichen Behandlungsphase das Gerät tagsüber und vor allem auch in der Nacht getragen werden kann. Die Unterkieferrücklage wird als Resultat einer Funktions- und Haltungsschwäche der Muskulatur betrachtet. Durch ein innen unterhalb der Unterkieferfront an der Lippe anliegendes Schild wird diese angeregt und vom Träger der Apparatur aktiv in eine gewünschte Position gebracht, so dass das Absinken des Unterkiefers vermieden wird. Die Schilder dienen nicht als mechanische Widerlager, sondern sie stellen einen mechanischen Reiz dar, der das Gewebe direkt nicht belastet. Beim Fränkel Funktionsregler werden neben den Lippenschilden oder Pelotten auch noch grossflächige Wangenschilder mittels eines komplexen Drahtskeletts einige Millimeter vom Kiefer beabstandet gehalten. Für eine komplette Behandlung werden drei bis vier der Fränkel Geräte benötigt, da Anpassungen des Einzelgerätes an das Kieferwachstum nicht möglich sind. Im Wechselgebiss kommt es mit der Fränkel-Apparatur zum Problem der Verzahnungshinderung, welches sogar zum Therapieabbruch führen kann. Der Fränkel-Funktionsregler lässt sich weder mit Brackets, noch mit einem Headgear kombinieren.

Liegen Fehlstellungen vor, die mit herausnehmbaren oder festen Spangen allein nicht ausreichend behandelt werden können, werden zusätzliche Kräfte mit extraoralen Apparaten, vorzugsweise Außenspangen oder Headgear, eingeleitet. Hauptfunktionen der Aussenspange liegen darin a) die Lage von zu weit vorne stehenden Seitenzähnen im Oberkiefer nach hinten zu korrigieren, b) korrekt stehende Seitenzähne am Vorgleiten zu hindern und c) den Oberkiefer im Wachstum gegenüber dem Unterkiefer zu hemmen. Die Aussenspange besteht aus einem Gesichtsbogen und einem Kopf- oder Nackenband. Der Gesichtsbogen wiederum baut sich aus einem Innen- und einem Außenbogen auf, die jeweils aus kräftigen Metalldrähten geformt und zentral im Übergangsbereich miteinander verbunden sind. Der Innenbogen wird in seinen Endbereichen lösbar an herausnehmbaren Platten oder festsitzenden Apparaturen befestigt. Vorzugsweise wird er in Röhrchen gesteckt, welche mit Bändern an den Backenzähnen befestigt sind. Der oft dickere Aussenbogen überträgt die Zugkräfte von den an Kopf und/oder Nacken anliegenden Bandsystemen (Nackenband und/oder Kopfkappe) auf den Innenbogen und damit auf die Zähne im Oberkiefer.

Vom Headgear- oder Teuscher-Aktivator ist die Kombination eines bimaxillären Monoblock-Gerätes mit einem Außenbogen als extraoralem Hilfsmittel zur Behandlung eines extremen Rückbisses bekannt. Werden solche Geräte bei einer weniger stark ausgeprägten Prognathie eingesetzt, so kann es an Stelle der gewünschten massvollen Korrektur jedoch zu einer Überkompensation und einem künstlich induzierten Unterkiefervorstand oder anderen Fehlstellungen kommen.

Die Behandlung mit FKO-Apparaturen dauert oft länger als die von festsitzenden Apparaturen und lässt zum Beispiel die gezielte Stellungsänderung von Einzelzähnen nur beschränkt zu. Die bekannten FKO-Apparaturen bringen oft massive Behinderungen beim Sprechen mit sich und sind im Erfolg stark abhängig von der Mitarbeit der oft sehr jungen Patienten. Zudem lassen sie sich nicht zeitgleich mit festsitzenden Apparaturen einsetzen.

Es ist daher die Aufgabe der vorliegenden Erfindung eine KO-Apparatur zur Verfügung zu stellen, die die Vorteile bekannter FKO-Apparaturen bei der Behandlung eines Rückbisses aufweist und gleichzeitig gezielte Zahnbeeinflussungen im Oberkiefer zulässt.

Diese Aufgabe wird durch eine Vorrichtung gemäss der kennzeichnenden Merkmale des Anspruches 1 gelöst.

Weitere Ausführungsvarianten ergeben sich aus den abhängigen Ansprüchen.

In den Zeichnungen ist ein Ausführungsbeispiel des Erfindungsgegenstandes dargestellt und in der nachfolgenden Beschreibung erläutert. Es zeigt:
- Figur 1a: eine Ansicht von innen (oral) auf ein Wachstumsleitgerät gemäss einer bevorzugten Ausführungsform der vorliegenden Erfindung;
- Figur 1b: eine Ansicht von unten (caudal) auf die Apparatur nach Figur 1a; und
- Figur 1c: eine Seitenansicht (sagittal) auf die Apparatur nach Figuren 1a und 1b.
- Figur 2a bis 2c: zeigen weitere bevorzugte Ausführungsformen von erfindungsgemässen Pelottenhaltern.
- Figur 3a: skizziert eine Hauptindikation für den Einsatz der erfindungsgemässen Apparatur; und
- Figur 3b: zeigt den Kieferbereich gemäss Figur 2a mit eingesetzter Apparatur in einer Ausführungsform mit lösbarer Befestigung an den Molaren und das Zusammenwirken mit den Lippen.
- Figur 4: illustriert den Unterschied der Unterkieferlage relativ zum Oberkiefer mit und ohne GGA zu Beginn der Behandlung, wobei die Unterkieferlage ohne eingesetzte Vorrichtung strichliniert dargestellt ist.
- Figur 5: zeigt eine Ausgangssituation A mit Unterlippeninterposition vor der Behandlung und Zielposition Z mit korrekter Schneidezahnstufe und entspannter Lippenlage nach Abschluss der Behandlung, und in
- Figur 6: ist die erfindungsgemässe Apparatur durch eine high-pull Kopfkappe (H) oder ein cervical-pull Nackenband (C) ergänzt in einer Aussenansicht dargestellt.

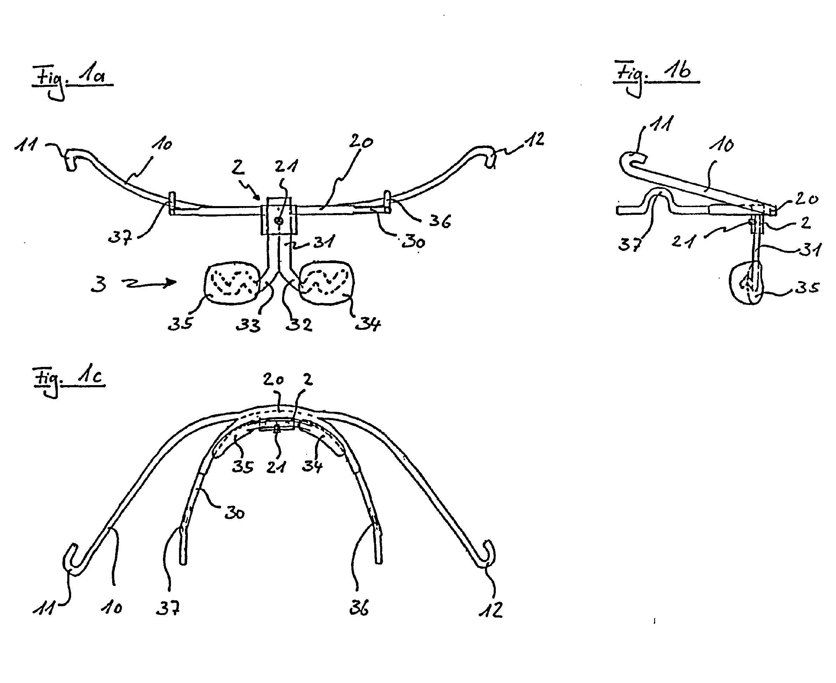

In der Figur 1 sind die zentralen Elemente einer Wachstumsleitapparatur oder Growth Guide Appliance (GGA) gemäss der vorliegenden Erfindung in einer bevorzugten Ausführungsform gezeigt. Ein im wesentlichen bekannter Gesichtsbogen 1 mit einem Außenbogen 10, welcher an der Außenseite des Gesichts annähernd parallel zu den Wangen verläuft, ist in einem Übergangsbereich 20 mit einem Innenbogen 30 fest verbunden. An beiden Enden weist der Aussenbogen 10 Haken 11, 12 auf, welche direkt oder über bekannte Sicherheitsmodule mit in der Figur 1 nicht dargestellten Kopf- oder Nackenzugbändern lösbar verbindbar sind. Die auf den Aussenbogen 10 wirkenden Zugkräfte werden im Übergang 20 auf den Innenbogen 30, welcher sich im Mundraum befindet, übertragen. Aussenbogen 10, Innenbogen 30 und Übergang 20 sind so gestaltet, dass sich der Übergang 20 in der Lippenspalte der zu behandelnden Person befindet, so dass eingesetztem Gesichtsbogen 1 die Lippen zwanglos geschlossen werden können. Der Innenbogen 30 überträgt die vom Aussenbogen eingelenkten Kräfte direkt auf die Zähne oder auf bekannte herausnehmbare Plattenapparaturen, welche im weiteren nicht näher beschrieben werden sollen. Beim Einsetzen des Gesichtsbogens 1 werden proximale Enden des Innenbogens 30 in dafür vorgesehene Röhrchen an den Molaren oder entsprechenden Aufnahmen an Platten geschoben. Die in der Seitenansicht 1b sichtbaren Resilienz-Schlaufen 36, 37 dienen zur horizontalen Positionierung des Gesichtsbogens 1. Der Gesichtsbogen 1 ist im Übergangsbereich 20 mit einer Aufnahme 2 zum Einführen und zum lösbaren Befestigen eines perioralen Pelottenhalters 3 versehen. Aus der Figur 1 wird deutlich, dass die Aufnahme 2 mittig an der Innenseite des Übergangs 20 angeordnet ist. Sie ist vorzugsweise mit dem Übergangsbereich verschweisst und weist eine hinreichende Vertikalausdehnung auf, um ein Verkippen oder Verschwenken des in ihr gehaltenen Pelottenhalters 3 zu verhindern. Im dargestellten Ausführungsbeispiel ist die Aufnahme 2 als im wesentlichen rechteckige Hülse geformt, die mit einer zentralen Fixierschraube zum lösbaren befestigen des Y-förmigen Pelottenhalters 3 versehen ist.

Korrespondierend zur Rechteckform der Aufnahme 2 ist ein Vertikalschenkel 31 des Pelottenhalters 3 im Querschnitt ebenfalls rechteckig ausgebildet, so dass der Halter 3 mit wenig oder keinem Spiel in die Aufnahme geschoben werden kann. Die Basis des Vertikalschenkels 31 lässt sich mit einem Befestigungsmittel 21, im dargestellten Ausführungsbeispiel mit einem Gewindestift 21, klemmend befestigen. Vertikalschenkel 31 und Aufnahme 2 sind im Querschnitt jeweils flach rechteckig geformt. Ein durch eventuell auftretende Torsionskräfte verursachtes Verdrehen des Vertikalarmes in der Aufnahme wird durch diese Formgebung auf einfache Weise verhindert. Der Vertikalschenkel 31 erstreckt sich mehr oder weniger senkrecht nach unten bis zur Gabelung und verzweigt sich in zwei laterale Schenkel 32, 33, welche je eine Pelotte 34, 35 tragen. Die Pelotten 34,35 sind aus bekannten Kunststoffmaterialien gefertigt und die lateralen Schenkel 32, 33 sind vorzugsweise in die jeweilige Pelotte eingelassen oder eingegossen. Um den Sitz der Pelotten auf den Flachdrähten 32, 33 zu verbessern sind die von der Pelotte umfassten Bereiche vorzugsweise noch ein- oder zweimal abgewinkelt und weisen dadurch eine Wellenform auf. Der Pelottenhalter 3 gemäss der Figur 1 stellt funktional ein oral der Unterlippe im nach caudal verdrängten Vestibulum liegendes Zwillingsschild dar, welches je nach fallspezifischen Bedürfnissen vertikal und beschränkt sagittal relativ zum Headgear adjustiert und fixiert werden kann.

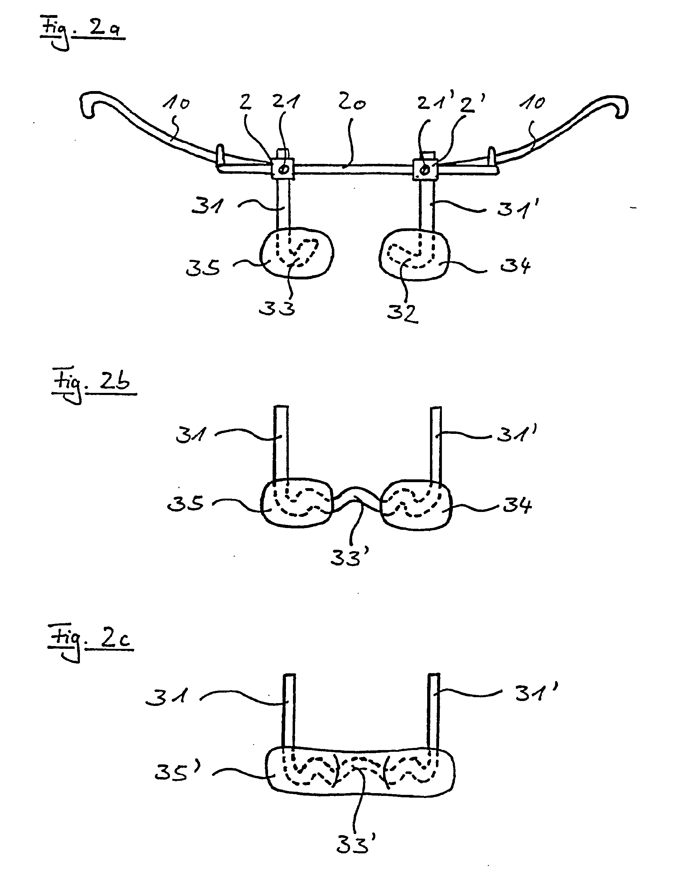

In der Figur 2 sind weitere Varianten von Pelottenhaltern gezeigt, welche im Weiteren beschrieben werden.

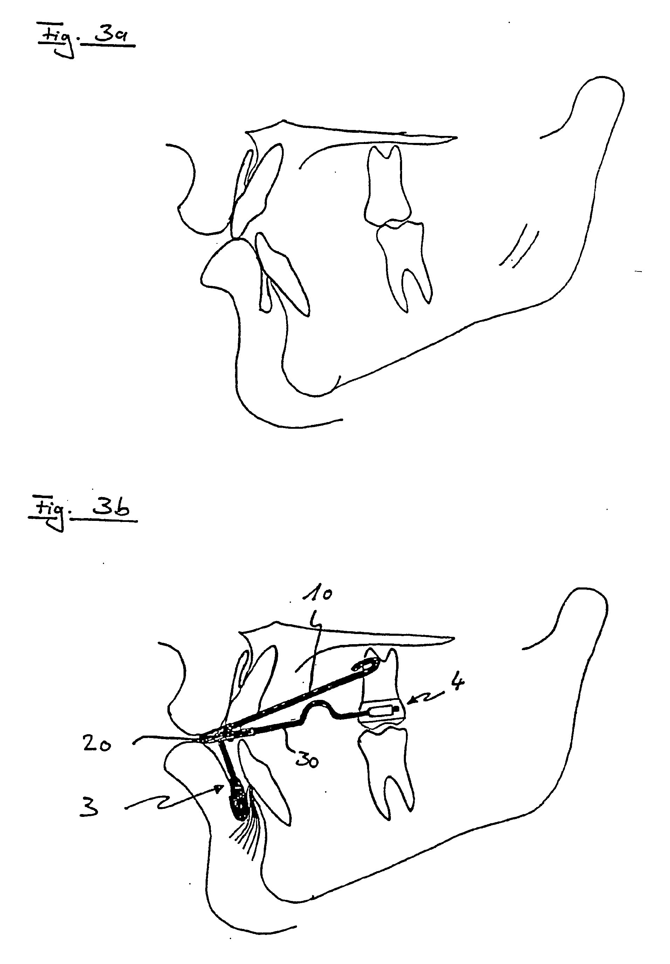

In der Figur 3a ist eine Hauptindikation für die erfindungsgemässe Apparatur gezeigt. Die Unterlippeninterposition bei vergrösserter sagittaler Schneidezahnstufe mit moderater skelettaler Abweichung ist behandlungsbedürftig, rechtfertigt aber noch nicht einen massiven Eingriff, wie zum Beispiel den Einsatz eines bimaxillären Monoblock-Gerätes. In der Figur 3b wird die Wirkungsweise von Headgear und Pelottenhalter 3 verdeutlicht. Der Unterkiefer wird von den beiden Kunststoff-Pelotten oder Kissen 34, 35 in klassischer FKO-Manier in eine gewünschte ventrale Lage geführt. Die Pelotten dienen nicht als Widerlager für den Unterkiefer, sondern sie sollen dem Patienten vielmehr einen Stimulus geben, von sich aus die Fehlhaltung zu korrigieren. Die Pelotten 34, 35 liegen tief im Vestibulum. Ober- und Unterlippe fassen den Headgearbogen, der zusammen mit dem Pelottenhalter 3 die Unterlippe korrekt positioniert und von der Schneidezahnfront abhält. Die störenden Kräfte der Lippen- und Kaumuskulatur werden also vom Unterkiefer abgehalten, während die Oberlippe ihren Einfluss verstärken kann. Der Pelottenhalter 3 liegt vor der Unterkieferfront im Vestibulum und verdrängt aktiv sein Gewölbe. Durch die individuelle Einstellung seiner Position in der sagittalen und vertikalen Dimension, kann der Unterkiefer in die gewünschte Lage geführt und dadurch eine Positionsänderung des Unterkiefers in Ruhelage erreicht werden. Die Kondylen werden nach vertikal-caudal verlagert. Dadurch wird vermehrtes Unterkieferwachstum angeregt und eine Veränderung der Wachstumsrichtung ermöglicht. Der Innenbogen 30 ist in der dargestellten Ausführungsvariante in Röhrchen gesteckt, welche an Bändern 4 an oberen Molaren befestigt sind.

Die Apparatur gemäss der vorliegenden Erfindung eliminiert die hemmenden Fehlfunktionen der perioralen Muskulatur und unterstützt die Korrektur der funktionellen Retrallage des Unterkiefers. Durch die via Unterlippe geführte, lockere und bequeme Auslenkung des Unterkiefers wird die Wachstumsrate gefördert und die Wachstumsrichtung therapeutisch umgeleitet. Dadurch wird die Verzahnung in die korrekte Stellung geleitet.

Eine Fehlfunktion der perioralen Muskulatur wird durch die Lageveränderung und Entspannung der Unterlippe korrigiert. Die Eliminierung der muskulären Dysfunktion ermöglicht eine spontane Retrusion und/oder eine Elongation der Oberkieferfrontzähne, sowie eine Protrusion der Unterkieferfrontzähne. Dies ermöglicht die passive Annäherung der Frontzähne und das teilweise oder vollständige Erreichen der funktionell korrekten Frontzahnrelation. Das Ziel ist die Herstellung des Gleichgewichts der perioralen Muskulatur. Dadurch wird eine langfristige Stabilität der Frontzahnrelation ermöglicht.

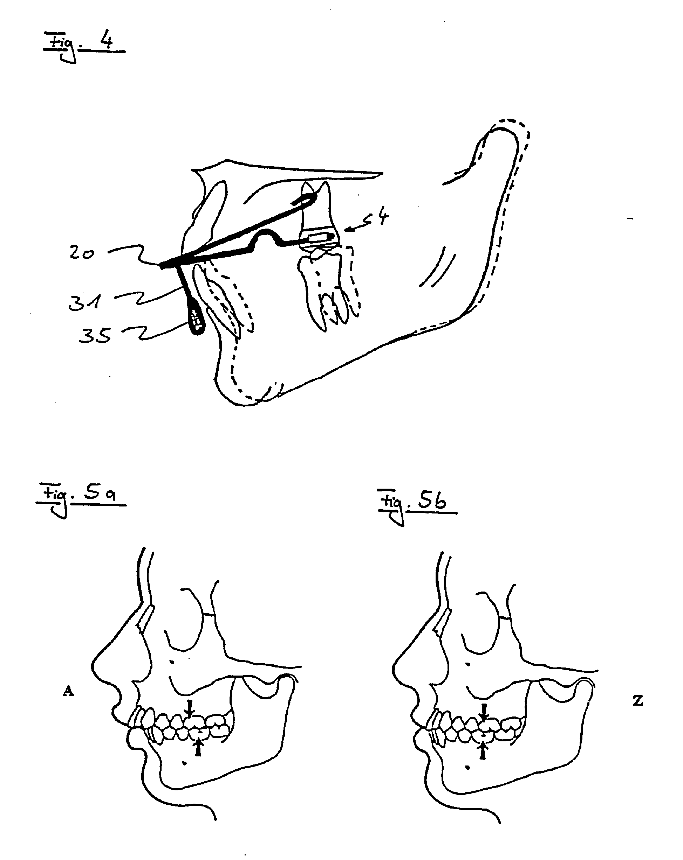

In der Figur 4 wird dieser Unterschied der Unterkieferlage relativ zum Oberkiefer zu Beginn der Behandlung (strichliniert dargestellt) und nach erfolgreicher Behandlung verdeutlicht. Die Grössenordnung der Unterkieferauslenkung wird von der Sagittallage des Pelottenhalters 3 vorgegeben. Bei der oben beschriebenen Hauptindikation (Ausgangssituation A mit Unterlippeninterposition) kann, wie in Figur 5 dargestellt, der Pelottenhalter 3 so positioniert sein, dass die gewünschte Zielposition Z mit korrekter Schneidezahnstufe und entspannter Lippenlage in nur einem Behandlungsschritt erreicht wird.

Im Gegensatz zu den bekannten FKO-Apparaten bietet der erfindungsgemässe Pelottenhalter den entscheidenden Vorteil, dass Einbau und Anpassung vom Zahnarzt oder einer Hilfskraft vor Ort während der Behandlung komplett vorgenommen werden kann. Das zeit- und kostenintensive Herstellen von Kiefermodellen und Wachsregistraten und der Weg über ein zahntechnisches Labor entfällt vollständig. Die bekannten individuell konstruierten und angepassten Apparaturen mit Kunststoffkörpern und verschiedenen Drahtteilen werden von einem vorgefertigter Pelottenhalter ersetzt. Die bekannten Gesichtsbögen müssen lediglich um eine Aufnahmemittel 2 ergänzt werden. Die damit einhergehende kleine Preiserhöhung fällt angesichts des erzielbaren Mehrwerts kaum negativ ins Gewicht.

Die äusserst preisgünstigen Pelottenhalter sind in einigen wenigen Grössen vorfabrizierbar und können von jedem Zahnarzt unter minimalem Kapitaleinsatz vorrätig gehalten werden. Je nach Alter und Grösse der zu behandelnden Person wird eine geeigneter Pelottenhalter ausgewählt und am Headgear 1 befestigt. Zusätzlich zur vertikalen Verstellmöglichkeit mittels Führung 2 und Haltemittel 21, lassen sich die Arme 31, 31', 32, 33, 33' auch noch leicht biegen und dadurch sagittal adjustieren.

Die Pelotten 34, 35 sind anatomisch geformt, das heisst, ihre Grösse und Form ist auf ihren Einsatz im Vestibulum oris angepasst. Bei Bedarf kann natürlich auch ihre Relativlage zueinander noch durch Biegen der Innenarme 32, 33, 33' angepasst werden. Sollte es nötig sein, den Unterkiefer in mehr als einem Behandlungsschritt in die gewünschte Zielposition zu führen, so kann die Vertikallage und auch die Sagittallage des Pelottenhalters 3 jederzeit verändert werden.

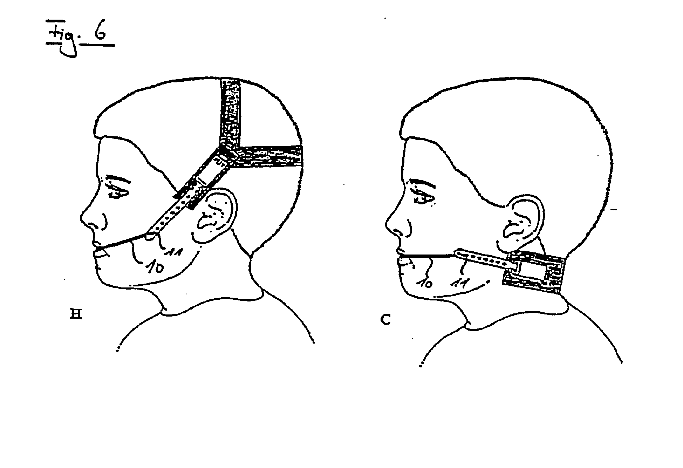

In der Aussenansicht nach Figur 6 ist angedeutet, dass je nach Kieferbasenwinkel und Neigung der Okklusionsebene die erfindungsgemässe Apparatur durch eine high-pull Kopfkappe (H) oder ein cervical-pull Nackenband (C) ergänzt wird. Die Zugkraft wird wie beim Konventionellen Headgear mittels safety release Federzug auf den Aussenbogen appliziert.

Der erfindungsgemässe Headgear unterscheidet sich von einem konventionellen Headgear also in erster Linie durch die Befestigungsmöglichkeit für einen Pelottenhalter. Neben der in der Figur 1 dargestellten Ausführungsform der Erfindung mit einer zentralen Führung 2 und einem Y-förmigen Pelottenhalter 3 können vorteilhafterweise, wie in der Figur 2 dargestellt, auch doppel-I-förmige oder U-förmige Pelottenhalter 3 zum Einsatz kommen, welche jedoch jeweils zwei Aufnahmen oder Führungen 2 am Übergangsbereich 20 des Gesichtsbogens 1 erfordern. Beim doppel-I-förmigen Halter gemäss der Figur 2a tragen zwei separate Vertikalarme 31, 31' jeweils eine Pelotte 35, 34. Die Pelotten lassen sich dadurch individuell, unabhängig voneinander positionieren. Beim U-förmigen Halter gemäss der Figur 2b sind die Vertikalarme über den Lateralarm 33' verbunden, und zusätzlich stabilisiert. In der Figur 2c ist eine Ausführungsform gezeigt, bei der ein U-förmiger Halter eine durchgehende Pelotte 35' trägt.

Anstelle der Fixierung der vertikalen Position des Pelottenhalters mittels einer Stellschraube können auch andere Formen von klemmenden, lösbaren oder festen Verbindungen zwischen Vertikalarm des Pelottenhalters und dem Übergang 20 verwendet werden. Der Vertikalarm kann zum Beispiel mittels Crimpen in einer entsprechend geformten Aufnahmehülse 2 befestigt werden. Eine Verbindung mittels Löten, Laserverschweissen oder Kleben ist ebenfalls möglich.

Die Ausführungsform der Figur 1 ist jedoch besonders bevorzugt, da sie eine Positionierung des Pelottenhalters mittels einfachster mechanischer Werkzeuge erlaubt. Vertikal wird der Halter 3 mit einem Schraubenzieher fixiert, und bei Bedarf mit einer Biegezange oder sogar von Hand in der sagittalen Ebene passend gebogen werden. Wie bereits oben erwähnt lässt sich die Pelottenposition bei Trageproblemen oder bei zweistufigen Behandlungen jederzeit anpassen und verändern.

Form und Materialwahl der erfindungsgemässen Apparatur ermöglichen eine einfache und gründliche Reinigung ausserhalb des Mundes, so dass einwandfreie Mundhygiene gewährleistet ist.

## Patentansprüche

1. Funktionskieferorthopädische (FKO) Apparatur die einen Uebergang oder Uebergangsbereich (20) aufweist, mit einem Gesichtsbogen als extraoralem Hilfsmittel zur Behandlung von Kiefer- und Zahnfehlstellungen, **dadurch gekennzeichnet, dass** der Gesichtsbogen (1) an seinem Uebergang oder Uebergangsbereich (20) mindestens eine Aufnahme (2) zum Befestigen eines Pelottenhalters (3) aufweist, in der der Pelottenhalter (3), der mindestens einen Vertikalarm (31, 31') aufweist und mindestens eine Pelotte (34, 35, 35') trägt, gehalten ist.

2. FKO-Apparatur nach Anspruch 1, **dadurch gekennzeichnet, dass** der Pelottenhalter (3), mit einem Y-förmigen Vertikalarm (31) versehen ist, der sich in zwei pelottentragenden Lateralarmen (32, 33) fortsetzt, wobei der Vertikalarm in eine zentralen Aufnahme (2) am Übergang (20) steckbar, vertikal positionierbar und befestigbar ist.

3. FKO-Apparatur nach Anspruch 1, **dadurch gekennzeichnet, dass** der Pelottenhalter (3) U-förmig oder doppel-I-förmig mit zwei Vertikalarmen (31, 31), in zwei Aufnahmen (2, 2') am Übergang (20) steckbar gestaltet und vertikal positionierbar und befestigbar ist.

4. FKO-Apparatur nach Anspruch 3 **dadurch gekennzeichnet, dass** der mindestens eine Vertikalarm (31, 31') des Pelottenhalters (3) mittels einer Befestigungsart aus der Gruppe der unlösbaren Verbindungen, Crimpen, Verlöten, Verschweissen und Kleben an der Aufnahme (2) am Übergang (20) befestigbar ist.

5. FKO-Apparatur nach Anspruch 4 **dadurch gekennzeichnet, dass** der Vertikalarm (31) mittels eines Gewindestiftes in der Aufnahme (2) am Übergang (20) lösbar befestigbar ist.

6. FKO-Apparatur nach Anspruch 3, **dadurch gekennzeichnet, dass** der oder die Vertikalarme (31, 31') mindestens im Befestigungsbereich im Querschnitt rechtwinklig geformt sind, und dass die mindestens eine korrespondierende Aufnahme (2,2') als im Querschnitt rechtwinklige Hülsen ausgestaltet ist.

7. FKO-Apparatur nach Anspruch 1, **dadurch gekennzeichnet, dass** die mindestens eine Aufnahme (2) an einer Innenseite des Übergangs (20) des Gesichtsbogens angeordnet ist.

8. FKO-Apparatur nach Anspruch 1, **dadurch gekennzeichnet, dass** die mindestens eine Aufnahme (2) lösbar befestigbar am Übergang (20) des Gesichtsbogens (1) angeordnet ist.

## Claims

1. A functional orthodontic (FO) appliance which has a transition or transition region (20), with a facebow as an extraoral aid for treating malpositions of the jaw and teeth, **characterised in that** the facebow (1) at its transition or transition region (20) comprises at least one receiver (2) for fastening a pad holder (3), and in which the pad holder (3) which comprises at least one vertical arm (31,31') and carries at least one pad (34, 35, 35'), is held.

2. An FO-appliance according to claim 1, **characterised in that** the pad holder (3) is provided with a Y-shaped vertical arm (31), which continues into two pad-carrying lateral arms (32, 33), wherein the vertical arm may be inserted into a central receiver (2) at the transition (20), and may be vertically positioned and fastened.

3. An FO-appliance according to claim 1, **characterised in that** the pad-holder (3) is U-shaped or double-1-shaped, with two vertical arms (31, 31), is designed insertable in two receivers (2, 2') at the transition, and may be vertically positioned and fastened.

4. An FO-appliance according to claim 3, **characterised in that** the at least one vertical arm (31,31') of the pad holder (3) may be fastened on the receiver (2) at the transition (20) by way of a fastening type of the group of unreleasable connections, crimping, soldering, welding and bonding.

5. An FO-appliance according to claim 4, **characterised in that** the vertical arm (31) is releasably fastenable in the receiver (2) at the transition (20), by way of a threaded pin.

6. An FO-appliance according to claim 3, **characterised in that** the vertical arm or arms (31, 31') are shaped rectangular in cross section at least in the fastening region, and that the at least one corresponding receiver (2, 2') is designed as sleeves which is rectangular in cross section.

7. An FO-appliance according to claim 1, **characterised in that** the at least one receiver (2) is arranged on an inner side of the transition (20) of the facebow.

8. An FO-appliance according to claim 1, **characterised in that** the at least one receiver (2) is arranged in a releasably fastenable manner at the transition (20) of the facebow (1).

## Revendications

1. Appareil d'orthodontie fonctionnelle (FKO) comportant une transition ou une zone de transition (20), avec un arc facial servant de moyen auxiliaire extraoral pour le traitement de mauvaises positions du maxillaire et des dents, **caractérisé en ce que** l'arc facial (1) comporte, au niveau de sa transition ou zone de transition (20), au moins un support (2) destiné à la fixation d'un porte-pelotes (3) et dans lequel est retenu le porte-pelotes (3), qui comprend au moins un bras vertical (31, 31') et supporte au moins une pelote (34, 35, 35').

2. Appareil d'orthodontie fonctionnelle selon la revendication 1, **caractérisé en ce que** le porte-pelotes (3) est équipé d'un bras vertical en forme de Y (31) qui se prolonge en deux bras latéraux porteurs de pelotes (32, 33), le bras vertical pouvant être fiché, positionné verticalement et fixé dans un support central (2) au niveau de la transition (20).

3. Appareil d'orthodontie fonctionnelle selon la revendication 1, **caractérisé en ce que** le porte-pelotes (3) est réalisé en forme de U ou de double I avec deux bras verticaux (31, 31) pouvant être fichés dans deux supports (2, 2') au niveau de la transition (20) et peut être positionné et fixé verticalement.

4. Appareil d'orthodontie fonctionnelle selon la revendication 3, **caractérisé en ce que** l'au moins un bras vertical (31, 31') du porte-pelotes (3) peut être fixé au moyen d'un type de fixation appartenant au groupe des fixations indissociables, sertissages, brasures, soudures et collages sur le support (2) au niveau de la transition (20).

5. Appareil d'orthodontie fonctionnelle selon la revendication 4, **caractérisé en ce que** le bras vertical (31) peut être fixé de manière dissociable au moyen d'une tige filetée dans le support (2) au niveau de la transition (20).

6. Appareil d'orthodontie fonctionnelle selon la revendication 3, **caractérisé en ce que** le ou les bras vertical(verticaux) (31, 31') a(ont) une conformation de section transversale quadrangulaire au moins dans la zone de fixation et que l'au moins un support correspondant (2, 2') est réalisé sous forme de manchons à section transversale orthogonale.

7. Appareil d'orthodontie fonctionnelle selon la revendication 1, **caractérisé en ce que** l'au moins un support (2) est disposé sur une face interne de la transition (20) de l'arc facial.

8. Appareil d'orthodontie fonctionnelle selon la revendication 1, **caractérisé en ce que** l'au moins un support (2) est disposé de manière à pouvoir être fixé de manière dissociable) au niveau de la transition (20) de l'arc facial (1).
